# EUROPÄISCHE PATENTSCHRIFT

(11) **EP 0 693 516 B1**
(45) Veröffentlichungstag und Bekanntmachung des Hinweises auf die Patenterteilung: **03.02.1999**
(21) Anmeldenummer: 95110709.3
(22) Anmeldetag: 10.07.1995
(51) Int. Cl.: C08G 73/10, C08G 69/10, C08G 73/06

(54) **Verfahren zur Herstellung von Polysuccinimid oder Maleinamidsäure**
Process for the preparation of polysuccinimide or maleinamide acid
Procédé de préparation de polysuccinimide ou d'acide maléinamide

(30) Priorität: 21.07.1994 DE 4425952
(43) Veröffentlichungstag der Anmeldung: 24.01.1996
(73) Patentinhaber: BAYER AG, 51368 Leverkusen (DE)
(72) Erfinder: Wagner, Paul, Dr., D-40597 Düsseldorf (DE); Gehrmann, Dietrich, Dr., D-51381 Leverkusen (DE); Bamberger, Thomas, D-51379 Leverkusen (DE); Giltjes, Manfred, D-51061 Köln (DE); Joentgen, Winfried, Dr., D-50769 Köln (DE); Groth, Torsten, Dr., D-51061 Köln (DE)

(56) Entgegenhaltungen:
- EP-A- 0 578 448
- DE-A- 4 305 368
- US-A- 2 459 964
- US-A- 5 329 020

## Beschreibung

Die Erfindung betrifft ein Verfahren zur kontinuierlichen Herstellung von Polysuccinimid aus Maleinsäureanhydrid und Ammoniak. Durch einen nachfolgenden Hydrolyseschritt ist eine Umwandlung des Polysuccinimids in Polyasparaginsäure (PAS) möglich.

In einer Verfahrensvariante kann ausgehend von den gleichen Edukten (Maleinsäureanhydrid und Ammoniak) Maleinamidsäure gewonnen werden.

Die Herstellung und Verwendung von Polysuccinimid und Polyasparaginsäure sowie ihrer Derivate ist seit langem Gegenstand zahlreicher Veröffentlichungen und Patente. So kann die Herstellung durch thermische Polykondensation von Asparaginsäure erfolgen (J. Org. Chem. 26, 1084 (1961)).

US-A 4 839 461 (= EP-A 0 256 366) beschreibt die Herstellung von Polyasparaginsäure aus Maleinsäureanhydrid, Wasser und Ammoniak. Maleinsäureanhydrid wird in wäßrigem Medium unter Zugabe von konzentrierter Ammoniak-Lösung in das Monoammoniumsalz umgewandelt. Das Monoammoniumsalz wird in der Schmelze zu Polysuccinimid polymerisiert und durch Hydrolyse in PAS oder ein Salz davon überführt, s. auch WO 93/23452.

Aus US-A 4 590 260 ist bekannt, Aminosäuren zusammen mit Derivaten der Äpfel-, Malein- und/oder Fumarsäure bei 100 bis 225°C einer Polykondensation zu unterwerfen. Gemäß US-A 4 696 981 werden bei derartigen Reaktionen Mikrowellen eingesetzt.

In DE-A 2 253 190 (= US-A 3 846 380) wird ein Verfahren zur Herstellung von Polyaminosäure-Derivaten, speziell Polyasparaginsäure-Derivaten, beschrieben. Danach werden neben Asparaginsäure auch Maleinsäure-Derivate (Monoammoniumsalz und Monoamid) durch thermische Polymerisation zur Herstellung des Polysuccinimids, das seinerseits in geeigneten Lösungsmitteln mit Aminen zu den gewünschten Derivaten umgesetzt werden kann, verwendet.

Die Umsetzung von Maleinsäureanhydrid und Ammoniak zu Maleinamidsäure ist ebenfalls bereits bekannt. Wie US-A 2 459 964 angibt, erhält man Maleinamidsäure durch Einleiten von Ammoniak in eine Lösung von Maleinsäureanhydrid in Xylol, Ethylenchlorid, Tetralin oder Dioxan bei 50 - 100°C und Isolieren der ausgefallenen Amidsäure durch Filtration.

In DE-A 945 987 wird ein Verfahren beschrieben, bei dem Maleinsäureanhydrid mit Ammoniak in Gegenwart oder Abwesenheit von Wasser zur Maleinamidsäure umgesetzt wird. Varianten bestehen darin, gepulvertes Maleinsäureanhydrid in eine gekühlte 21 %ige wäßrige Ammoniaklösung einzutragen oder aber gepulvertes Maleinsäureanhydrid mit Ammoniak zu begasen.

Die oben beschriebenen, von Maleinsäureanhydrid und Ammoniak ausgehenden Verfahren haben alle den Nachteil, daß sie in Lösung ablaufen, was eine Abtrennung der Reaktionsprodukte aus der Lösung erforderlich macht, oder aber, daß sie die Handhabung und die Durchmischung von pulverförmigem Maleinsäureanhydrid verlangen, was arbeitshygienisch nicht unbedenklich und verfahrenstechnisch aufwendig ist.

Der Erfindung liegt deshalb die Aufgabe zugrunde, rieselfähiges trockenes Polysuccinimid oder rieselfähige Maleinamidsäure aus Maleinsäureanhydrid und Ammoniak in einem einfachen, kontinuierlich zu betreibenden Apparat herzustellen.

Diese Aufgabe wird erfindungsgemäß dadurch gelöst, daß geschmolzenes Maleinsäureanhydrid bei Temperaturen zwischen 53°C und 250°C, vorzugsweise zwischen 60°C bis 120°C, in dampfförmiger oder flüssiger Phase feinverteilt, **daß Tropfen mit einem mittleren Durchmesser zwischen 5 µm und 5 mm erzeugt werden**, in eine Gasatmosphäre eingebracht wird, die entweder aus gasförmigen Ammoniak oder aus einem Gasgemisch von Ammoniak und mindestens einem anderen Gas besteht und deren Temperatur zwischen 10°C und 500°C liegt. Die Art der Produkte kann über die Gastemperatur gesteuert werden. Für die Herstellung von Polysuccinimid ist der bevorzugte Temperaturbereich 120°C bis 250°C, für die Herstellung der Maleinamidsäure ist der bervorzugte Temperaturbereich 10°C bis 120°C.

Der Druck in der Gasatmosphäre liegt dabei vorteilhaft zwischen 0,01 MPa und 20 MPa, vorzugsweise zwischen 0,05 MPa bis 1 MPa.

Bei niedrigen Temperaturen der Schmelze, vorzugsweise zwischen 60°C und 120°C (bei 0,1 MPa), können mit geeigneten Zerstäubungsorganen (Einstoffdüse, Zweistoffdüse, Zerstäuberscheibe und Prilleinrichtung) Tropfen mit mittleren Durchmessern zwischen vorzugsweise 20 µm bis 200 pm erzeugt werden. Die Reaktion läuft dann in der flüssigen Phase ab. Bei höheren Temperaturen, vorzugsweise oberhalb 200°C und bei Drucken zwischen 0,05 und 1 MPa verdunstet oder verdampft das Maleinsäureanhydrid bei der Zerstäubung merklich und reagiert in der Gasphase zu feinen Kondensattropfen aus Polysuccinimid (mittlerer Durchmesser 1 - 10 µm). Der Eintrag des geschmolzenen Maleinsäureanhydrids in die Ammoniak enthaltende Atmosphäre kann von oben nach unten, von unten nach oben (Springbrunnenfahrweise) oder seitlich in einen Reaktor oder Sprühturm erfolgen (vorzugsweise von oben nach unten). Die Gasführung kann mit oder gegen die Schwerkraftwirkung vorgenommen werden (vorzugsweise mit der Schwerkraftwirkung). Die Abmessungen der verwendeten Apparate müssen ebenso wie die Lage des Eintragorts, die Strömungsführung und die Strömungsgeschwindigkeit der Gasphase so beschaffen sein, daß die Tröpfchen eine für den Ablauf der Reaktion ausreichende Verweilzeit in der Gasphase haben. Das bei der Reaktion zu Polysuccinimid entstehende Wasser verdampft oder verdunstet und wird von der Gasphase abtransportiert. Durch das Temperieren der Gasphase kann die Reaktionstemperatur und damit die Art der entstehenden Produkte gesteuert werden. Die Gasphase ist somit nicht nur Reaktionspartner sondern auch Temperiermedium und im Falle der Herstellung von Polysuccinimid zusätzlich Trocknungsmedium. Sie wird sinnvollerweise im Kreislauf gerührt, wobei das eventuell enthaltene Wasser entfernt, die gewünschte Temperatur eingestellt und die Ammoniakverluste ausgeglichen werden.

Das so hergestellte Polysuccinimid kann zu einer Polyasparaginsäure-haltigen Suspension hydrolysiert werden. Die Hydrolyse erfolgt vorteilhaft bei Temperaturen zwischen 20°C und dem Siedepunkt der Polyasparaginsäure-haltigen Suspension und bei einem pH-Wert von 5 bis 14. Vorzugsweise wird die Hydrolyse durch Zugabe einer Base durchgeführt. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc..

Die nach diesem Verfahren hergestellte Maleinamidsäure kann unter Zufuhr von Wärme zu Polysuccinimid polymerisiert werden.

Mit der Erfindung werden folgende Vorteile erzielt:
- Durch die feine Verteilung des Maleinsäureanhydrids im gasförmigen Ammoniakstrom werden große Reaktionsoberflächen geschaffen, so daß eine schnelle Umsetzung erfolgt.
- Wird Polysuccinimid hergestellt, so sind im Gegensatz zu den bisher bekannten Verfahren keine weiteren Polymerisationsschritte erforderlich. Das Polysuccinimid fällt bereits im ersten Verfahrensschritt als rieselfähiges, fertiges Produkt an und kann dann leicht weiterverarbeitet werden. Das bei der Reaktion entstehende Wasser verdampft oder verdunstet und kann mit der Gasphase aus dem Reaktionsraum entfernt werden.
- Wird Maleinamidsäure hergestellt, so fällt dieses in einem einzigen Verfahrensschritt rieselfähig an.

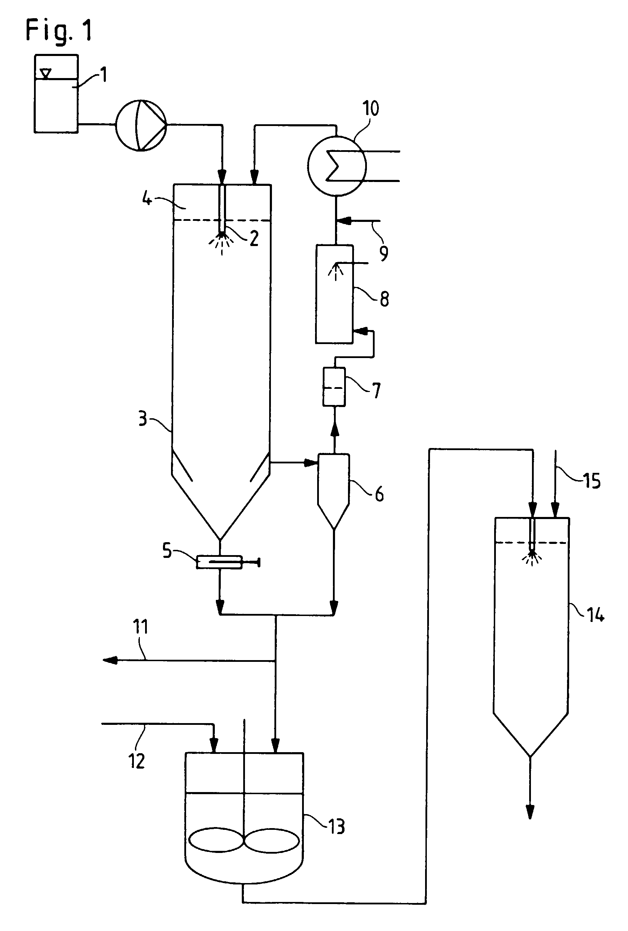

Im folgenden wird die Erfindung anhand eines in Figur 1 dargestellten möglichen Verfahrensschemas (Verwendung einer Einstoffdüse) beschrieben. Außerdem werden Ausführungsbeispiele angegeben.

Das Maleinsäureanhydrid wird in einem Vorlagegefäß 1 bei Temperaturen zwischen 60°C und 120°C aufgeschmolzen und über eine Rohrleitung mit Schutzbeheizung einer Einstoffdüse 2 zugeführt, die von oben in einen Sprühturm 3 hineinragt. Dieser Sprühturm 3 wird kontinuierlich von Ammoniak, worin Restmengen an Wasser enthalten sein können, mit einer Temperatur zwischen 10°C und 250°C von oben nach unten durchspült. Ein Verteilerboden 4 sorgt für eine gleichmäßige und wirbelfreie Strömungsführung. Die gebildeten Polysuccinimid- oder Maleinamidsäurepartikel fallen im Konus des Sprühturms an und können über einen Absperrschieber 5 entnommen werden. Der den Sprühturm verlassende Gasstrom wird in einem Zyklon 6 und einem Filter 7 von mitgerissenen Partikeln befreit. Die abgetrennten Partikel werden mit dem über den Absperrschieber entnommenen Stoff in 11 vereinigt. Bei der Herstellung von Polysuccinimid muß das gebildete Wasser in einem Wäscher 8 entfernt werden. Ammoniakverluste können durch Zugabe von frischem Ammoniak über Leitung 9 ausgeglichen werden. Ein Wärmeübertrager 10 erwärmt schließlich das Ammoniak auf die gewünschte Temperatur, bevor es in den Sprühturm 3 zurückgeführt (rezykliert) wird.

Die Hydrolyse des Polysuccinimids zu Polyasparaginsäure-Na-Salz wird unter Zugabe von Natronlauge 12 in einem Rührkessel 13 durchgeführt, die Sprühtrocknung der Polyasparaginsäure-Na-Salz-Lösung erfolgt in einem weiteren Sprühturm 14 mit vorgewärmter Luft 15 (Eingangstemperatur 180°C, Ausgangstemperatur 80°C).

Anstelle der Einstoffdüse 2 können auch Zweistoffdüsen, Zerstäuberscheiben oder Prill-Einrichtungen zur Zerstäubung des geschmolzenen Maleinsäureanhydrids verwendet werden. Dabei können mittlere Tropfendurchmesser zwischen 1 µm und 5 mm eingestellt werden. Der optimale Bereich für den mittleren Tropfendurchmesser liegt aber zwischen 20 µm und 200 µm.

Anstelle von reinem Ammoniak kann die Gasphase auch aus einem Gemisch von Ammoniak und mindestens einem anderen Gas bestehen. Der Eintrag des geschmolzenen Maleinsäureanhydrids in die Ammoniak enthaltende Atmosphäre kann auch von unten nach oben (Springbrunnen-Fahrweise) oder durch einen seitlich am Sprühturm 3 angebrachten Stutzen erfolgen. Die Gasströmung kann im Gleich- oder Gegenstrom zur eingedüsten Flüssigkeit geführt werden. Die Abmessungen der verwendeten Apparate müssen ebenso wie die Lage des Eintragsorts (Sprühdüse), die Strömungsführung und die Strömungsgeschwindigkeit so gewählt werden, daß die versprühten Maleinsäureanhydridtröpfchen eine für den Ablauf der Reaktion ausreichende Verweilzeit in der Gasphase haben. Beispielhaft sollte die Verweilzeit zwischen 5 s und 50 s liegen. Das Verhältnis der gesamten Gasmenge zur eingedüsten Menge Maleinsäureanhydrid (MSA) sollte so gewählt werden, daß eine ausreichende Menge NH₃ für die Reaktion zur Verfügung steht. Dies bedeutet, daß das Verhältnis Stoffmengenstrom NH3/Stoffmengenstrom MSA 1 bis 12 (mol/mol), vorzugsweise 1 bis 6 (mol/mol) betragen sollte. Zusätzlich muß mit dem Gas die Reaktionstemperatur eingestellt und für den Fall der Herstellung von Polysuccinimid das gebildete Wasser abgeführt werden. Dazu muß das Verhältnis Massenstrom Gas/Massenstrom MSA bei 0,17 bis 20 (kg/kg), vorzugsweise bei 0,5 bis 10 (kg/kg), liegen.

Mit Hilfe des Wärmeübertragers 10 kann die rezyklierte Gasphase temperiert werden. Auf diese Weise kann auch die Reaktionstemperatur und damit die Art der entstehenden Produkte gesteuert werden. Die Gasphase ist daher nicht nur Reaktionspartner, sondern dient auch als Temperiermedium und im Falle der Herstellung von Polysuccinimid zusätzlich als Trocknungsmedium. Bei der Kreislaufführung (Rezyklierung) wird das bei der Herstellung von Polysuccinimid entstehende Wasser entfernt (Wäscher 8), die gewünschte Temperatur eingestellt (Wärmeübertrager 10) und die Ammoniakverluste ausgeglichen (Ammoniakstutzen 9) .

### Ausführungsbeispiele

### Beispiel 1:

2,6 kg/h geschmolzenes Maleinsäureanhydrid mit einer Temperatur von etwa 100°C wird zusammen mit 2,6 kg/h eines Gasgemisches aus 0,173 Gewichtsanteilen Ammoniak und 0,827 Gewichtsanteilen Stickstoff mit einer Temperatur von etwa 40°C über eine Zweistoffdüse (Fa. Schlick, Coburg, Typ 951) von oben in einen Sprühturm mit 6 m Höhe eingesprüht. Der Druck im Turm liegt bei 0,102 MPa. Das am Boden des Sprühturms aufgefangene Produkt weist einen Umsatz von 95,4 % zu Maleinamidsäure auf.

### Beispiel 2:

10,4 kg/h geschmolzenes Maleinsäureanhydrid mit einer Temperatur von etwa 110°C wird zusammen mit 7 kg/h eines Gasgemisches aus 0,886 Gewichtsanteilen Ammoniak und 0,114 Gewichtsanteilen Stickstoff mit einer Temperatur von etwa 40°C über eine Zweistoffdüse (Fa. Schlick, Coburg, Typ 943) von oben in einen Sprühturm mit 6 m Höhe eingesprüht. Gleichzeitig strömt 9 kg/h Stickstoff mit einer Temperatur von 156°C von oben nach unten durch den Sprühturm. Der Druck im Turm liegt bei 0,102 MPa. Das am Boden des Sprühturms aufgefangene Produkt weist einen Umsatz von 53,4 % zu Polysuccinimid auf.

### Beispiel 3:

15,2 kg/h geschmolzenes Maleinsäureanhydrid mit einer Temperatur von etwa 95°C wird bei einem Druck von 0,45 MPa über eine Einstoffdüse (Fa. Schlick, Coburg, Typ 121, Bohrungsdurchmesser 0,8 mm) von oben in einen Sprühturm mit 6 m Höhe eingesprüht. Gleichzeitig strömt 10,8 kg/h Ammoniak mit einer Temperatur von 160°C von oben nach unten durch den Sprühturm. Der Druck im Turm liegt bei 0,102 MPa. Das am Boden des Sprühturms aufgefangene Produkt weist einen Umsatz von 50,3 % zu Polysuccinimid auf.

Das gemaß dem oben beschriebenen Verfahren hergestellte Produkt läßt sich durch alkalische Hydrolyse mit 48,8 %iger Natronlauge in das Polyasparaginsäure-Na-Salz überführen. Dazu werden das Polysuccinimid und die Natronlauge bei Temperaturen zwischen 50°C und 60°C mit einem Massenverhältnis von 1:0,74 (Polysuccinimid:Natronlauge) simultan in die Vorlage 13 eindosiert, die das 0,59-fache der Polysuccinimidmasse an Wasser enthält, wobei ein pH-Wert von 9 nicht überschritten werden sollte. Bei dem Auflösen des Polysuccinimids muß eine vollständige Hydrolyse der Imid-Einheiten ohne Hydrolyse der Amid-Bindungen der Polymerkette erfolgen. Die hergestellte ca. 50 %ige Lösung (Dichte bei 20°C = 1,342, pH = 8,4) kann sprühgetrocknet werden (Sprühtrockner 14).

## Patentansprüche

1. Verfahren zur kontinuierlichen Herstellung von Polysuccinimid oder Maleinamidsäure aus Maleinsäureanhydrid und Ammoniak, dadurch gekennzeichnet, daß geschmolzenes Maleinsäureanhydrid bei Temperaturen zwischen 53°C und 250°C, vorzugsweise zwischen 60°C und 120°C, in dampfförmiger oder flüssiger Phase fein verteilt, **daß Tropfen mit einem mittleren Durchmesser zwischen 5 µm und 5 mm erzeugt werden**, in eine Gasatmosphäre eingebracht wird, die entweder aus gasförmigem Ammoniak oder aus einem Gasgemisch aus Ammoniak und mindestens einem anderen Gas besteht und deren Temperatur zwischen **10°C** und 500°C liegt.

2. Verfahren nach Anspruch 1, dadurch gekennzeichnet, daß für die Herstellung von Polysuccinimid in einem Temperaturbereich von 120°C bis 250°C gearbeitet wird.

3. Verfahren nach Anspruch 1, dadurch gekennzeichnet, daß für die Herstellung von Maleinamidsäure in einem Temperaturbereich von 10°C bis 120°C gearbeitet wird.

4. Verfahren nach Anspruch 1 bis 3, dadurch gekennzeichnet, daß der Druck in der Gasatmosphäre zwischen 0,01 MPa und 20 MPa, vorzugsweise zwischen 0,05 MPa und 1 MPa, liegt.

5. Verfahren nach Anspruch 1 bis 4, dadurch gekennzeichnet, daß das geschmolzene, flüssige Maleinsäureanhydrid in einen kontinuierlich mit Ammoniak durchströmten Sprühturm (3) eingedüst wird, daß die aus Polysuccinimid und/oder Maleinamidsäure bestehenden Partikel im Konus des Sprühturms anfallen und der Ammoniak in den Sprühturm (3) rezykliert wird.

6. Verfahren nach Anspruch 1 bis 2 oder 4 bis 5, dadurch gekennzeichnet, daß das resultierende Polysuccinimid zu einer Polyasparaginsäure-haltigen Suspension hydrolysiert wird.

7. Verfahren nach Anspruch 6, dadurch gekennzeichnet, daß die Hydrolyse durch Zugabe einer Base durchgeführt wird.

8. Verfahren nach Anspruch 6, dadurch gekennzeichnet, daß die Hydrolyse bei Temperaturen zwischen 20°C und dem Siedepunkt der Polyasparaginsäure-haltigen Suspension und bei einem pH-Wert von 5 bis 14 durchgeführt wird.

## Claims

1. Process for the continuous preparation of polysuccinimide or maleamic acid from maleic anhydride and ammonia, characterized in that molten maleic anhydride is finely divided in vaporous or liquid phase at temperatures between 53°C and 250°C, preferably between 60°C and 120°C, in that droplets are produced having an average diameter between 5 µm and 5 mm, are introduced into a gas atmosphere which consists either of gaseous ammonia or a gaseous mixture of ammonia and at least one other gas and whose temperature is between 10°C and 500°C.

2. Process according to Claim 1, characterized in that a temperature range of 120°C to 250°C is employed for the preparation of polysuccinimide.

3. Process according to Claim 1, characterized in that a temperature range of 10°C to 120°C is employed for preparing maleamic acid.

4. Process according to Claim 1 to 3, characterized in that the pressure in the gas atmosphere is between 0.01 MPa and 20 MPa, preferably between 0.05 MPa and 1 MPa.

5. Process according to Claim 1 to 4, characterized in that the molten, liquid maleic anhydride is injected into a spraying tower (3) through which ammonia continuously flows, in that the particles which consist of polysuccinimide and/or maleamic acid are produced in the cone of the spraying tower and the ammonia is recirculated to the spraying tower (3).

6. Process according to Claim 1 to 2 or 4 to 5, characterized in that the resulting polysuccinimide is hydrolysed to give a polyaspartic acid-containing suspension.

7. Process according to Claim 6, characterized in that the hydrolysis is carried out by adding a base.

8. Process according to Claim 6, characterized in that the hydrolysis is carried out at temperatures between 20°C and the boiling point of the polyaspartic-acid-containing suspension and at a pH of 5 to 14.

## Revendications

1. Procédé de préparation continue de polysuccinimide ou d'acide maléamique à partir d'anhydride maléique et d'ammoniac, caractérisé en ce que de l'anhydride maléique fondu à des températures entre 53°C et 250°C, de préférence entre 60°C et 120°C, est introduit à l'état finement divisé en phase gazeuse ou liquide, de manière que des gouttes d'un diamètre moyen compris entre 5 µm et 5 mm soient formées dans une atmosphère gazeuse qui consiste en ammoniac ou en un mélange gazeux d'ammoniac et d'au moins un autre gaz et dont la température est comprise entre 10°C et 500°C.

2. Procédé selon la revendication 1, caractérisé en ce que l'on opère dans un domaine de température de 120°C à 250°C pour la préparation du polysuccinimide.

3. Procédé selon la revendication 1 caractérisé en ce que l'on opère dans un domaine de température de 10°C à 120°C pour la préparation de l'acide maléamique.

4. Procédé selon les revendications 1 à 3, caractérisé en ce que la pression dans l'atmosphère gazeuse est située entre 0,01 MPa et 20 MPa, de préférence entre 0,05 MPa et 1 MPa.

5. Procédé selon les revendications 1 à 4, caractérisé en ce que l'anhydride maléique fondu liquide est introduit par une buse dans une tour de pulvérisation (3) traversée en continu par de l'ammoniac, en ce que les particules consistant en polysuccinimide et/ou en acide maléamique se déposent dans le cône de la tour de pulvérisation et l'ammoniac est recyclé dans la tour de pulvérisation (3).

6. Procédé selon les revendications 1 et 2 ou 4 et 5, caractérisé en ce que le polysuccinimide résultant est hydrolysé en une suspension contenant du poly(acide aspartique).

7. Procédé selon la revendication 6, caractérisé en ce que l'hydrolyse est réalisée par addition d'une base.

8. Procédé selon la revendication 6, caractérisé en ce que l'hydrolyse est réalisée à des températures comprises entre 20°C et le point d'ébullition de la suspension contenant du poly(acide aspartique) et à un pH de 5 à 14.
